# FASCICULE DE BREVET EUROPEEN

(11) **EP 3 079 047 B1**
(45) Date de publication et mention de la délivrance du brevet: **27.09.2017**
(21) Numéro de dépôt: 16170975.3
(22) Date de dépôt: 24.04.2013
(51) Int. Cl.: G06F 3/044, G06F 3/041, G06F 3/0484

(54) **PROCÉDÉ POUR INTERAGIR AVEC UN APPAREIL METTANT EN OEUVRE UNE SURFACE DE COMMANDE CAPACITIVE ET APPAREIL METTANT EN OEUVRE CE PROCÉDÉ**
VERFAHREN ZUR INTERAKTION MIT EINEM GERÄT, BEI DEM EINE KAPAZITIVE STEUERFLÄCHE BENUTZT WIRD UND GERÄT ZUR ANWENDUNG DIESES VERFAHRENS
METHOD FOR INTERACTING WITH AN APPARATUS IMPLEMENTING A CAPACITIVE CONTROL SURFACE AND APPARATUS IMPLEMENTING THIS METHOD

(30) Priorité: 25.04.2012 FR 1253820; 16.04.2013 FR 1353417
(43) Date de publication de la demande: 12.10.2016
(62) Demande divisionnaire de: 13723682.4
(73) Titulaire: QuickStep Technologies LLC, Wilmington, DE 19801 (US)
(72) Inventeur: ROZIERE, Didier, 30900 Nîmes (FR); BLONDIN, Christophe, 30900 Nîmes (FR)
(74) Mandataire: Lang, Johannes

(56) Documents cités:
- EP-A1- 2 090 966
- US-A1- 2008 048 997
- US-A1- 2009 160 820

## Description

### Domaine technique

La présente invention concerne un procédé pour interagir avec un appareil électronique et/ou informatique, mettant en oeuvre une surface de commande capacitive. Elle concerne également une interface homme-machine et un appareil utilisateur mettant en oeuvre ce procédé.

Le domaine de l'invention est, mais de manière non limitative, celui des interfaces homme-machine (IHM) pour interagir avec un appareil utilisateur, mettant en oeuvre une technologie de détection capacitive. Plus particulièrement, le domaine de l'invention est celui des IHM comprenant une surface de commande à technologie capacitive, pour interagir avec un appareil utilisateur sans contact avec ladite surface de commande.

### Etat de la technique

La plupart des appareils électroniques de communication ou des appareils audiovisuels sont équipés d'écrans ou de surfaces de commande, communément appelées surfaces tactiles, permettant d'interagir avec ces appareils. Dans les appareils de type tablette ou Smartphone, la surface de commande est transparente. Elle est intégrée dans ou sur l'écran d'affichage de ces appareils pour augmenter la taille de l'écran d'affichage.

Les surfaces de commandes capacitives permettent de détecter un objet de commande, tel qu'un doigt ou un stylet, en contact avec la surface de commande ou à distance de la surface de commande.

Les surfaces de commande utilisant la technologie capacitive souffrent d'un phénomène indésirable, appelé « effet de bord », qu'on tente de minimiser ou ignorer pour, d'une part, éviter les interférences avec les objets environnants, et d'autre part, augmenter la portée en détection de la surface de commande. Ainsi, dans les surfaces de commande capacitives, la détection de l'objet de commande n'est prise en compte que lorsqu'il entre en contact avec la surface de commande ou lorsqu'il est présenté en regard de la surface de commande. Par conséquent, si l'objet de commande est présenté sur la périphérie de la surface de commande sans être en contact avec la surface de commande, il n'est pas détecté ou n'est pas pris en compte, même s'il est en contact avec l'appareil.

US 2009/160820 A1 décrit une couche de protection à la périphérie d'une surface tactile active pour éviter qu'une fausse détection indique un toucher dans ladite surface active alors que le toucher est survenu à la périphérie.

Dans le même temps, les appareils munis d'une telle surface de commande capacitive comprennent sur le rebord ou le chant de l'appareil, plus généralement sur la périphérie de la surface de commande, des moyens de sélection additionnels pour sélectionner certaines fonctions telles que le réglage du volume, l'allumage ou l'extinction de l'écran d'affichage, etc. Ces moyens de sélection peuvent comprendre au moins un bouton électromécanique ou au moins un capteur capacitif, qui viennent s'ajouter à la surface de commande capacitive, et qui augmentent la complexité et le coût de fabrication de l'appareil.
Un but de la présente invention est de remédier aux inconvénients précités.
Un autre but de la présente invention est de proposer un procédé d'interaction avec un appareil muni d'une surface de commande capacitive permettant de mieux exploiter les fonctionnalités offertes par la surface de commande capacitive.
Un autre but de la présente invention est de proposer un procédé d'interaction avec un appareil muni d'une surface de commande capacitive rendant l'interaction avec l'appareil plus simple et plus rapide.
Enfin un autre but de la présente invention est de proposer un procédé d'interaction avec un appareil muni d'une surface de commande capacitive permettant de diminuer la complexité et le coût de fabrication de l'appareil tout en préservant les fonctionnalités de l'appareil.

### Exposé de l'invention

L'invention concerne un procédé selon la revendication 1 et un appareil électronique selon la revendication 7.

Le procédé selon l'invention permet donc d'exploiter l'effet de bord d'une surface de commande capacitive pour d'une part détecter un ou des objets de commande disposé(s) sur une surface neutre, non munie d'électrodes capacitives, et d'autre part, déclencher une ou des fonctions réalisées par l'appareil utilisateur suite à une telle détection.

Selon l'invention, un objet de commande est en regard de la surface neutre lorsqu'il est à distance de la surface neutre, tout en étant visible de la surface neutre.

Ainsi, le procédé selon l'invention permet d'exploiter l'effet de bord d'une surface de commande capacitive qui est un phénomène physique indésirable pour les procédés et systèmes de l'état de la technique, qui tentent de le minimiser, ou l'ignorer, voire l'annuler par des moyens physiques tels que des électrodes de garde ou des moyens logiciels et algorithmiques.

Ainsi, le procédé selon l'invention permet de réaliser une interaction avec un appareil muni d'une surface de commande capacitive en exploitant toutes les fonctionnalités offertes par la surface de commande capacitive.

De plus, l'interaction proposée par le procédé selon l'invention avec un appareil utilisateur muni d'une surface de commande capacitive est plus simple et plus rapide, puisque la seule détection d'un objet de commande sur une surface neutre permet de déclencher une fonction. Ainsi, lorsque l'objet de commande est un doigt ou une main, la simple saisie par l'utilisateur de l'appareil utilisateur permet de déclencher des fonctions.

En outre, un appareil utilisateur muni d'une surface de commande capacitive et mettant en oeuvre le procédé d'interaction selon l'invention est moins coûteux et moins complexe que les appareils actuels puisqu'il permet d'éviter l'utilisation de moyens de commande additionnels, tels que des boutons électromécaniques ou des capteurs capacitifs, en plus de la surface de commande capacitive.

Dans la présente demande, par « surface neutre » on entend une surface de l'appareil utilisateur, en particulier non munie d'électrodes capacitives, se trouvant en périphérie de ladite surface de commande, et présentant une frontière commune ou non avec la surface de commande.

La surface neutre peut être dans le même plan que la surface de commande, ou dans un plan formant un angle non nul avec le plan de la surface de commande.

Suivant un exemple de réalisation particulier, la surface neutre peut être formée par au moins une partie d'un rebord ou d'un chant de l'appareil utilisateur, et peut former un angle non nul avec la surface de commande. Lorsque l'appareil utilisateur est de forme générale rectangulaire, une surface neutre peut être formée par au moins une partie de deux chants opposés, voire au moins trois chants, et éventuellement sur chacun des chants de l'appareil utilisateur.

Suivant un autre exemple de réalisation, la surface neutre peut être agencée au niveau de la périphérie d'une face, dite d'interaction, de l'appareil utilisateur comportant également la surface de commande, et préférentiellement l'écran d'affichage, sur au moins un côté de la face d'interaction. Avantageusement, une surface neutre peut être agencée sur chacun de deux côtés opposés de la face, ou sur trois côtés de la face, éventuellement sur chacun de tous les côtés de la face d'interaction.

Les surfaces de commande capacitives utilisent deux grands principes de mesure.

Le principe le plus courant met en oeuvre la technologie dite « mutual capacitance » utilisant des électrodes en forme de ligne et colonne. Les lignes, respectivement colonnes, sont émetteurs excitées par un signal électriques et les colonnes, respectivement lignes, sont des récepteurs. La capacité crée entre chaque intersection ligne-colonne varie en fonction de la présence d'un objet ou pas. Cette technologie est peu sensible aux effets de bord car les lignes de champ sont très localisées aux intersections des lignes et colonnes.

Le deuxième principe met en oeuvre la technologie dite « self capacitance ». Dans le cas de ce deuxième principe deux architectures sont possible pour les électrodes capacitives : une première architecture utilisant des électrodes en forme de ligne et colonnes, et une deuxième architecture utilisant des électrodes individuel les matricielles. Dans les deux cas, les lignes de champ sont attirées très facilement vers tout objet relié à la masse, qui est plus particulièrement la tension de référence de l'objet, et il devient possible de détecter un objet à distance, c'est-à-dire sans qu'il y ait de contact entre cet objet et la surface de commande. L'inconvénient de l'architecture ligne- colonne est l'impossibilité de détecter plusieurs objets : à partir de 2 objets, il apparaît des fantômes, i .e. des faux objets. L'avantage de la solution matricielle est la possibilité de détecter plusieurs objets en contact et sans contact.

L'invention est plus particulièrement adaptée pour une surface de commande mettant en oeuvre une technologie dite « self capacitance » utilisant l'architecture matricielle.

Le procédé selon l'invention peut avantageusement comprendre, après l'étape de détection et avant l'étape de déclenchement, une étape de détermination de la nature d'au moins un objet de commande disposé contre la surface neutre, l'étape de déclenchement étant réalisée en fonction de ladite nature dudit objet de commande. Ainsi, l'étape de détermination peut déterminer si l'objet de commande est un stylet ou un doigt ou une partie de la main, ou une main tenant l'appareil.

Lorsque l'objet de commande est une main tenant l'appareil, l'étape de détermination peut déterminer s'il s'agit de la main droite ou de la main gauche, ou encore l'orientation de la main.

Lorsque l'objet de commande est un doigt de l'utilisateur, l'étape de détermination peut déterminer s'il s'agit d'un pouce de l'utilisateur ou d'un autre doigt de l'utilisateur.

L'étape de détermination de la nature de l'objet de commande peut comprendre les opérations suivantes :
- constitution d'un profil, dit détecté, en fonction de données de détection relatives à un ou plusieurs objets de commande détectés, en particulier simultanément, fournies par les électrodes de mesures de la surface de commande
- détermination de la nature de l'objet de commande, par comparaison dudit profil détecté à une pluralité de profils prédéterminés correspondant chacun à un objet de commande dont la nature est connue.

Le profil détecté peut avantageusement comprendre des données relatives :
- à la position de chacun des objets de commande détectés,
- au nombre d'objets détectés,
- la distance entre, au moins deux, en particulier chacun, des objets détectés, et
- à un mouvement de chaque de commande détecté.

Par « mouvement d'un objet de commande » on entend une quantité de déplacement, une vitesse de déplacement et/ou une accélération de déplacement d'un objet de commande sur la surface neutre.

Avantageusement, l'étape de détection peut comprendre, pour au moins un, en particulier chaque objet disposé au contact ou en regard de la surface neutre, une détection de la position dudit objet de commande sur ladite surface neutre.

La détection de la position d'un objet de commande peut être réalisée en fonction de la position des électrodes détectant l'objet de commande par l'effet de bord.

L'étape de détection peut avantageusement comprendre une détection du nombre d'objets de commande disposés au contact ou en regard de la surface neutre.

Le nombre d'objets détectés peut être déterminé en fonction du nombre de groupes indépendants d'électrodes capacitives détectant un objet de commande par l'effet de bord.

L'étape de détection peut avantageusement comprendre, pour au moins un, en particulier chaque objet de commande disposé au contact ou en regard de la surface neutre, une détection de la forme dudit objet de commande.

La forme d'un objet de commande peut être déterminée par des fonctions/algorithmes prenant en compte la force du signal de mesure de chaque électrode capacitive adjacente d'un même groupe détectant l'objet de commande par l'effet de bord.

Avantageusement, l'étape de détection peut comprendre une détection d'une distance entre au moins deux objets de commande disposés au contact ou en regard la surface neutre.

La mesure de la distance entre deux objets de commande détectés peut être réalisée de la manière suivante. Pour chaque objet de commande détecté, l'électrode fournissant le signal de plus forte amplitude est identifiée dans le groupe d'électrodes détectant cet objet. Ensuite, la distance est mesurée entre l'électrode de plus forte amplitude détectant l'un des objets et l'électrode de plus forte amplitude détectant l'autre des objets.

La distance mesurée peut être une distance directe ou une distance périphérique prenant en compte un chemin périphérique autour de la surface de commande capacitive.

L'étape de détection peut avantageusement comprendre, pour au moins un, en particulier chaque objet de commande disposé au contact ou en regard de la surface neutre, une détection/mesure d'un mouvement dudit objet de commande.

Selon l'invention, la fonction déclenchée peut comprendre une fonction d'ajustement de la valeur d'un paramètre associée à une fonction réalisée par ledit appareil utilisateur.

Une telle fonction d'ajustement peut être par exemple l'ajustement du son, de la luminosité d'affichage, du contraste d'affichage, etc.

Une telle fonction d'ajustement est particulièrement pertinente lorsque la détection comprend une détection du mouvement d'un objet de commande, et en particulier la quantité de déplacement de l'objet de commande.

En particulier, la fonction ajustée peut être le volume sonore, qui peut être désactivée ou activée en fonction de l'étape de détection.

Selon l'invention, une surface neutre peut être dédiée à l'ajustement d'une fonction prédéterminée. Par exemple, une surface neutre disposée sur une partie haute d'un chant de l'appareil utilisateur peut être associée à l'ajustement du son émis par l'appareil utilisateur.

Plus généralement, selon l'invention, une pluralité de surfaces neutres, en particulier indépendantes, peuvent être prédéfinies en périphéries de la surface de commande.

Au moins une de ces surfaces neutres peut être pré-associée/pré-dédiée à une fonction prédéterminée quel que soit l'affichage réalisé ou la navigation au sein de l'appareil.

Au moins une de ces surfaces neutres peut être utilisée pour déclencher une fonction ou ajuster un paramètre, la fonction ou le paramètre en question étant choisi ou sélectionné en fonction de l'affichage réalisée par l'appareil utilisateur, ou de la navigation réalisée au sein de l'appareil utilisateur ou encore par l'utilisateur suite à un paramétrage. Ainsi, une telle surface n'est pas associée à une fonction unique mais peut être associée à plusieurs fonctions différentes en fonction de l'interaction avec l'appareil utilisateur.

La fonction déclenchée peut avantageusement comprendre une fonction de démarrage d'une application, telle que par exemple une application de prise d'image ou de vidéo ou d'un jeu.

La fonction déclenchée peut avantageusement comprendre une fonction liée à l'affichage réalisée sur un écran d'affichage dudit appareil utilisateur ou d'un autre appareil commandé par ledit appareil utilisateur.

Selon un mode de réalisation préférée, la fonction déclenchée peut comprendre un allumage de l'écran d'affichage.

Par exemple, lorsque l'étape de détection détecte la saisie de l'appareil par une main, cela veut dire que l'utilisateur vient de saisir l'appareil pour interagir avec celui-ci. Dans ce cas, la détection de la main déclenche automatiquement l'allumage de l'écran de l'appareil.

Selon un mode de réalisation particulièrement préférée, la fonction déclenchée peut comprendre un déverrouillage de l'écran d'affichage, et/ou de la surface de commande.

Par exemple, lorsque l'étape de détection détecte la saisie de l'appareil par une main, en particulier la main droite, respectivement la main gauche, si l'utilisateur est prédéfini comme étant droitier, respectivement gaucher, cela veut dire que l'utilisateur vient de saisir l'appareil pour interagir avec celui-ci. Dans ce cas, la détection de la main, en particulier de la nature de la main, déclenche automatiquement le déverrouillage de l'écran d'affichage, et/ou de la surface de commande.

Selon un mode de réalisation particulièrement préférée, la fonction déclenchée peut comprendre un repositionnement d'au moins un objet, en particulier d'un bouton ou d'un symbole ou encore d'une icône associée à une fonction ou au déclenchement d'une fonction, affiché sur l'écran d'affichage.

En effet, il est possible de modifier l'affichage réalisée ou la position de boutons de commande ou d'objets affichés en fonction de la position du ou des doigts sur l'appareil utilisateur pour faciliter la visualisation des objets ou des boutons de commande affichés et éviter qu'ils soient cachés, en partie ou en totalité, par un doigt de l'utilisateur.

Il est en outre possible de modifier l'affichage réalisé ou la position de boutons de commande ou d'objets affichés en fonction de la nature, gauche ou droite, de la main détectée, et ce pour faciliter la sélection d'un objet ou d'un bouton de commande. En effet, certaines zones de sélection plus ou moins facile à atteindre sont différentes, selon que l'utilisateur est un gaucher ou un droitier. Ainsi, il est possible d'éloigner au moins un objet affiché ou un bouton de commande du pouce de l'utilisateur, supprimer/désactiver/verrouiller certains objets/boutons de commande non exploitable en fonction de la position de la main.

Selon un mode de réalisation particulièrement préférée, la fonction déclenchée peut comprendre un ajustement d'une orientation d'un affichage réalisé sur l'écran d'affichage.

En effet, il est possible de modifier l'orientation de l'affichage en fonction par exemple de la position d'une main qui tient l'appareil. En particulier, si la détection montre que l'appareil est tenu par l'utilisateur en mode « paysage », respectivement en mode « portrait », une rotation peut être appliquée à l'affichage pour afficher les objets en mode « paysage », respectivement en mode « portrait ».

En outre, la fonction déclenchée peut comprendre une désactivation d'au moins un bouton de commande considéré comme mal placé par rapport à l'objet de commande détecté. Par exemple, un ou des boutons de commande d'une fonction peuvent être désactivées en fonction de la position d'un ou des doigts sur l'appareil ou tenant l'appareil.

Plus généralement, la fonction déclenchée peut être choisie en fonction d'une ou des surfaces neutres, contre ou en regard de la ou desquelles l'objet ou les objets de commande est/sont disposé(s).

Selon un autre aspect de l'invention, il est proposé une interface homme-machine comprenant :
- une surface de commande, munie d'une pluralité d'électrodes capacitives, agencée pour détecter au moins un objet de commande situé à une distance non nulle de ladite surface de commande, et
- des moyens pour réaliser les étapes du procédé selon l'invention.

L'interface homme-machine selon l'invention peut en outre comprendre une couche de garde des électrodes capacitives, disposée à un potentiel (V_{G}), dit de garde, sensiblement égal ou exactement égal au potentiel desdites électrodes de mesure.

Avantageusement, les électrodes capacitives peuvent être disposées suivant une structure matricielle, chaque électrode capacitive réalisant une mesure de capacité entre ladite électrode capacitive et l'objet de commande en « self capacitance » tel que décrit plus haut.

Selon encore un autre aspect de l'invention, il est proposé un appareil électronique et/ou informatique comprenant une interface homme-machine selon l'invention.

Un tel appareil utilisateur peut en particulier être un appareil prévu pour être tenu à la main par l'utilisateur lors de son utilisateur.

Un tel appareil peut être de toutes les formes : rectangulaire, carré, rond, etc.

Un tel appareil peut être une tablette, un téléphone, un Smartphone, une console de jeu, un PDA, etc.

Bien entendu, l'appareil selon l'invention peut être tout appareil, tel qu'un ordinateur, comprenant une surface de commande associée à un écran d'affichage.

En effet, l'appareil selon l'invention comprend préférentiellement un écran d'affichage. Dans ce cas, la surface de commande peut selon un mode de réalisation préférentiel être transparente et disposée sur ou dans cet écran d'affichage, permettant de visualiser par transparence l'affichage réalisé par l'écran d'affichage.

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique selon une vue de coupe d'une interface selon l'invention ;
- la FIGURE 2 est une représentation schématique d'un premier exemple d'un appareil selon l'invention mettant en oeuvre l'interface et le procédé selon l'invention ;
- la FIGURE 3 est une représentation schématique d'un deuxième exemple d'un appareil selon l'invention mettant en oeuvre l'interface et le procédé selon l'invention ;
- la FIGURE 4 est une représentation schématique d'un exemple de procédé selon l'invention ; et
- les FIGURES 5-8 sont des représentations schématiques de plusieurs configurations d'interaction avec un appareil utilisateur selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique. Sur les figures, les éléments communs à plusieurs figures conservent la même référence.

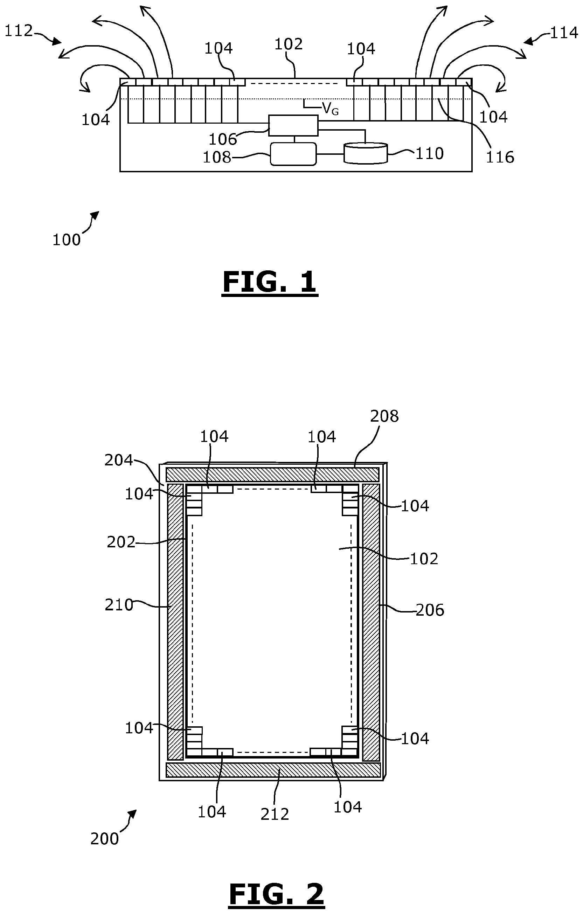

La FIGURE 1 est une représentation schématique selon une vue de coupe d'une interface homme-machine selon l'invention.

L'interface 100 représentée sur la FIGURE 1 comprend une surface de commande 102 et un ensemble d'électrodes capacitives 104, dites de mesure, prévues pour détecter un ou plusieurs objets de commande, avec ou sans contact de l'objet de commande avec la surface de commande 102.

L'interface homme-machine 100 comprend un module électronique de mesure 106 relié aux électrodes capacitives de mesure 104 pour recevoir de chacune des électrodes capacitives de mesure 104 un signal de détection et en déduire des données relatives à la détection réalisée et composant un profil détecté.

Le profil détecté fourni par le module de mesure peut comprendre des données relatives :
- à la position de chaque objet de commande détecté,
- au nombre d'objets de commande détectés,
- la distance entre, au moins deux, en particulier chaque objet de commande détecté, et
- à un mouvement de chaque de commande détecté, c'est-à-dire une distance de déplacement, à une vitesse de déplacement et/ou à une accélération de l'objet de commande.

L'interface 100 comprend en outre un module logiciel d'analyse 108 analysant le profil détecté fourni par le module de mesure 106, et fournir une donnée relative à la nature (main, doigt, stylet, etc..) de chaque objet de commande, et éventuellement un mouvement associé à chaque objet de commande et mesuré par le module de mesure 106.

L'interface 100 comprend en outre une base de données 110 comprenant :
- un ou des algorithmes de détection utilisés par le module de de mesure 106 pour déterminer un profil détecté en fonction des signaux fournis par les électrodes de capacitives de mesure 104, et
- un ensemble de profils prédéterminés et pré mémorisés, consultés par le module d'analyse 108 pour déterminer la nature d'un objet de commande, en fonction d'un profil détecté fourni par le module de mesure 106.

La FIGURE 1 représente également les lignes de champ 112, 114 correspondant aux électrodes de mesure 104 se trouvant en périphérie de la surface de commande 102. Les lignes de champ périphériques 112 et 114 sont attirées vers les côtés de la surface de commande 102, de manière plus ou moins déformées. Plus une électrode de mesure 104 se trouve à la périphérie, c'est-à-d ire proche de la frontière de la surface de commande 102, plus la ligne de champ de cet électrode est horizontale. Ce phénomène physique est appelé « effet de bord » et est utilisé dans la présente invention pour détecter un ou des objets de commande qui ne sont pas en contact ou en regard de la surface de commande 102, mais en périphérie proche de la surface de commande 102, et en particulier en contact avec une surface neutre d'un appareil utilisateur mettent en oeuvre l'interface 100. En effet, les lignes de champ des électrodes périphériques sont capables de détecter un ou des objets de commande se trouvant en périphérie de la surface de commande 102.

L'interface 100 comprend également une couche 116, dite de garde, mise à un potentiel de garde V_{G} identique ou sensiblement identique au potentiel de chacune des électrodes de mesure 104. Sur la FIGURE 1, la couche de garde 116 est positionnée sous les électrodes de mesure 104, de sorte que les électrodes de mesure 104 se trouvent entre la couche de garde 116 et la surface de commande 102.

La FIGURE 2 est une représentation schématique d'un premier exemple d'appareil selon l'invention comprenant l'interface homme-machine de la FIGURE 1.

L'appareil 200 représenté sur la FIGURE 2 comprend un écran d'affichage 202 sur laquelle sont agencés la surface de commande 102 et les électrodes de mesure 104. Alternativement la surface de commande 102 peut être formée au moins en partie par l'écran d'affichage 202. La face 204 de l'appareil 200, comportant l'écran d'affichage 202, est appelée dans la suite la face d'interaction avec l'utilisateur.

L'appareil 200 comprend en outre, sur la face d'interaction 204, quatre surfaces neutres 204-210 ne comprenant pas d'électrodes de mesure ou de moyens de détection d'un ou plusieurs objets de commande, ou encore des moyens de sélection électromécaniques.

Ainsi, chaque surface neutre 206-212 est dans le même plan, ou dans un plan parallèle au plan formé par la surface de commande 102.

Les surfaces neutres 206-212 sont disposées chacune à la périphérique de la surface de commande 102, au niveau de chacun des bords de la face d'interaction 204. Chaque surface neutre 206-212 est indépendante des autres surfaces neutres 206-212, et est distincte de la surface de commande 102.

Lorsqu'un ou plusieurs objets de commande, tel qu'un doigt ou une main sont disposés contre ou en regard d'une surface neutre 206-212, ce ou ces objets de commande sont détectés par les électrodes de mesure 104 disposées sous/dans la surface de commande 102 en périphérie de la surface de commande, par l'exploitation de l'effet de bord créé par ces électrodes.

Alternativement, les surfaces neutres 206-212 peuvent se toucher pour former une unique surface neutre entourant complètement la surface de commande.

Alternativement, l'appareil peut ne pas comprendre une surface neutre sur un ou plusieurs de ses bords.

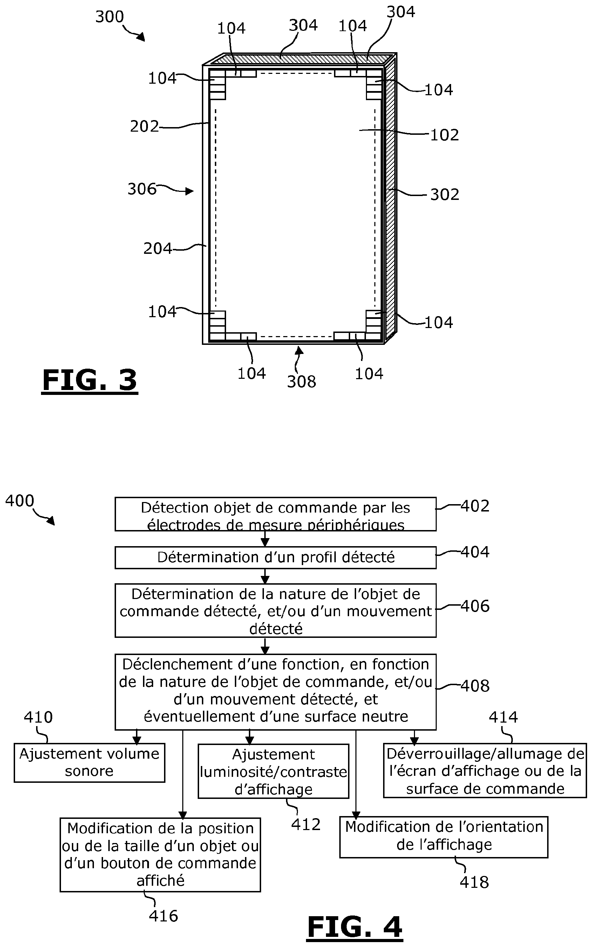

La FIGURE 3 est une représentation schématique d'un deuxième exemple d'appareil selon l'invention comprenant l'interface homme-machine de la FIGURE 1.

L'appareil 300 représenté sur la FIGURE 3 comprend un écran d'affichage 202 sur laquelle sont agencés la surface de commande 102 et les électrodes de mesure 104. Alternativement la surface de commande 102 peut être formée au moins en partie par l'écran d'affichage 202. La face 204 de l'appareil 300, comportant l'écran d'affichage 202, est appelée dans la suite la face d'interaction avec l'utilisateur.

L'appareil 200 comprend en outre, sur chacun de ses chants ou tranches une surface neutre 302-308 ne comprenant pas d'électrodes de mesure ou de moyens de détection d'un ou plusieurs objets de commande, ou encore des moyens de sélection électromécaniques.

Ainsi, chaque surface neutre 206-212 est dans un plan, formant un angle non nul, en particulier un angle de 90°, avec le plan formé par la surface de commande 102.

Les surfaces neutres 302-308 sont disposées chacune à la périphérique de la surface de commande 102, au niveau de chacun(e) des chants/tranches de l'appareil 300 reliant la face d'interaction à une face arrière de l'appareil 300.

Chaque surface neutre 302-308 est indépendante des autres surfaces neutres 302-308, et est distincte de la surface de commande 102.

Lorsqu'un ou plusieurs objets de commande, tel qu'un doigt ou une main sont disposés contre ou en regard d'une surface neutre 302-308, par exemple lorsque l'utilisateur saisit l'appareil par ses chants/tranches, ce ou ces objets de commande, par exemple les doigts ou la main de l'utilisateur, sont détectés par les électrodes de mesure 104 disposées sous/dans la surface de commande 102 en périphérie de la surface de commande 102, par l'exploitation de l'effet de bord créé par ces électrodes 104.

Alternativement, les surfaces neutres 302-308 peuvent se toucher pour former une unique surface neutre entourant complètement la surface de commande 102.

Alternativement, l'appareil 300 peut ne pas comprendre une surface neutre sur un(s) ou plusieurs de ses chants/tranches.

Le mode de réalisation de la FIGURE 3 présente l'avantage de pouvoir disposer de toute la surface de la face d'interaction pour y disposer un écran d'affichage. Par conséquent, ce mode de réalisation permet, soit de disposer d'un écran d'affichage 202 plus grand pour une taille donnée de la face d'interaction 204, soit de disposer d'un appareil plus petit pour une taille donnée de l'écran d'affichage 202.

Bien entendu, il est possible de combiner les modes de réalisation représentés sur les FIGURES 2 et 3. Ainsi, un appareil utilisateur selon l'invention peut être muni d'au moins une surface neutre sur la face d'interaction de l'appareil, c'est-à-dire dans le même plan que la surface de commande et/ou l'écran d'affichage, et au moins une surface neutre, indépendante ou non, sur un(e) chant/tranche de l'appareil.

La FIGURE 4 est une représentation schématique d'un exemple de procédé selon l'invention pouvant être mise en oeuvre dans l'interface de la FIGURE 1 et/ou dans l'appareil de la FIGURES 2 ou 3.

Le procédé 400 représenté sur la FIGURE 4 comprend une étape 402 lors de laquelle au moins un objet de commande est détecté par exploitation de l'effet de bord créé par les électrodes périphériques de la surface de commande.

Lors d'une étape 404 un profil détecté est déterminé, en fonction des signaux fournis par les électrodes périphériques de la surface de commande. Ce profil prend en compte tous les objets de commande détectés, ainsi que le cas échéant le(s) mouvement(s) de chaque objet de commande

Lors d'une étape 406, la nature du ou des objets de commande détectés est déterminée par comparaison du profil détecté à des profils prédéterminés ou à des données prédéterminées.

En fonction du profil détecté, c'est-à-dire de la nature du ou des objets de commande, et le cas échéant, du ou des mouvements du ou des objets de commande une ou plusieurs fonctions sont déclenchées, par des commandes émises vers l'appareil, et plus particulièrement vers le processeur de l'appareil et/ou les organes de l'appareil concernés par les fonctions déclenchées.

Après l'étape 408 au moins une des étapes suivantes est réalisée, en même temps ou à la suite : une étape 410 d'ajustement du volume sonore de l'appareil utilisateur, une étape 412 d'ajustement de la luminosité ou du contraste de l'écran d'affichage de l'appareil utilisateur, une étape 414 de déverrouillage de l'écran d'affichage et/ou de la surface de commande, une étape 416 de modification de la position ou de la taille d'un objet ou d'un bouton de commande affiché, et une étape 418 de modification de l'orientation de l'affichage réalisée sur l'écran d'affichage.

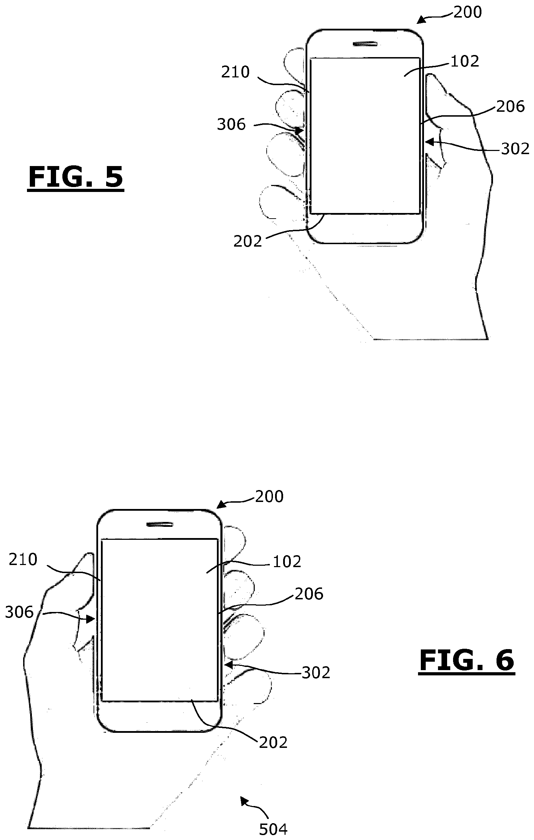

Les FIGURES 5-8 sont des représentations schématiques de plusieurs configurations d'interaction avec un appareil utilisateur selon l'invention.

Dans les configurations qui vont être décrits, les sens droite, gauche, haut et bas sont définis par rapport à un utilisateur regardant la surface de commande 102 et/ou l'écran d'affichage 202, en mode paysage.

Dans la configuration de la FIGURE 5, un doigt est détecté sur/contre le chant ou le rebord droit de l'appareil 200, i.e. sur/contre la surface neutre 210 et/ou la surface 306. En même temps, plusieurs doigts sont détectés sur le chant ou le rebord gauche de l'appareil 200, i .e sur/contre la surface neutre 206 et/ou la surface 302. Ce profil détecté est associé à une détection d'un objet de commande correspondant à une main droite et déclenche un positionnement prédéterminé des icônes et des boutons de commande affichés sur l'écran d'affichage 202, associé à une utilisation main droite.

Dans la configuration de la FIGURE 6, un doigt est détecté sur/contre le chant ou le rebord gauche de l'appareil 200, i .e sur/contre la surface neutre 206 et/ou la surface 302. En même temps, plusieurs doigts sont détectés sur le chant ou le rebord droit de l'appareil 200, i .e. sur/contre la surface neutre 210 et/ou la surface 306. Ce profil détecté est associé à une détection d'un objet de commande correspondant à une main gauche et déclenche un positionnement prédéterminé des icônes et des boutons de commande affichés sur l'écran d'affichage 202, associé à une utilisation main gauche.

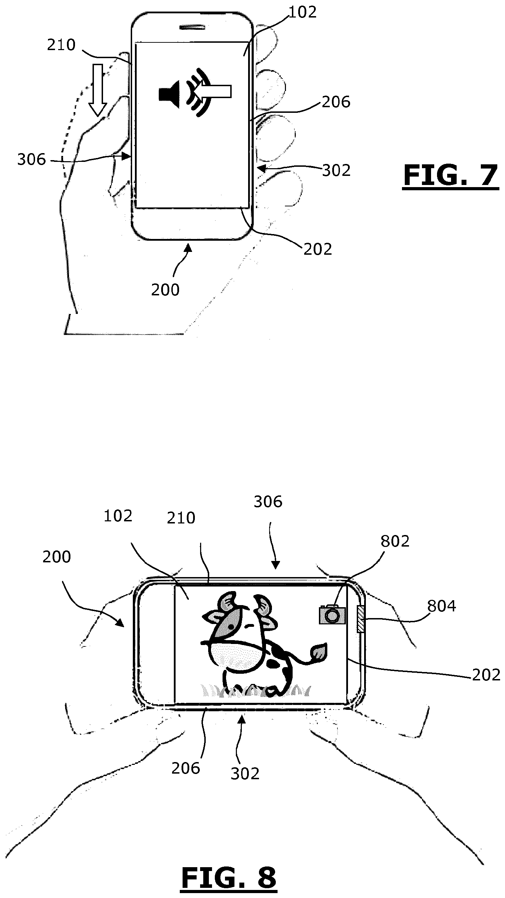

Dans la configuration de la FIGURE 7, en plus de la détection réalisée dans la configuration de la FIGU RE 6, on détecte un glissement vers le bas du doigt posé sur le chant ou le rebord gauche de l'appareil 200, i.e sur/contre la surface neutre 206 et/ou la surface 302. Dans ce cas, un paramètre d'une fonction est ajusté. La fonction ajustée peut être une fonction choisie par défaut, par exemple le volume sonore tel que représenté dans la configuration 506 : le volume sonore est diminué si le mouvement est vers le bas tel que représenté sur la FIGURE 7. Le volume sonore est augmenté si le mouvement est vers le haut contrairement à ce qui est représenté sur la FIGURE 7. La fonction ajustée peut également être présélectionnée par l'utilisateur, tel que par exemple la luminosité ou le contraste de l'écran d'affichage, ou dépendre de l'affichage ou du menu affiché sur l'écran.

Dans la configuration de la FIGURE 8, un doigt est détecté sur/contre chaque coin de l'appareil 200, c'est-à-dire au niveau de chaque extrémité d'une part de la surface neutre 206 et/ou la surface 302 et d'autre part de la surface neutre 210 et/ou la surface 306. Ce profil détecté est associé à une détection d'une tenue en mode paysage de l'appareil 200 et déclenche un affichage des icônes et des boutons de commande affichés sur l'écran d'affichage 202, en mode paysage. An alternative, ce profil détecté peut être associé à une prise d'image ou de vidéo. Dans ce cas, une application de prise d'image ou de vidéo est lancée automatiquement. De plus, un bouton de commande virtuel 802 ou un ensemble de boutons de commande virtuels peut être affiché et associé à une surface neutre 804, se trouvant en périphérie de l'écran d'affichage 202 ou sur la tranche ou le rebord de l'appareil 200. Ainsi, il est possible d'activer par positionnement d'un doigt sur cette surface neutre 804 de déclencher/arrêter la prise d'image ou de vidéo.

Nous allons maintenant décrire d'autres exemples non limitatifs et non exhaustifs de fonctions déclenchées et le profil détecté associé à ces fonctions :

| | |
|---|---|
| Doigts posés sur trois chants/rebords de l'appareil | Déverrouillage de l'écran d'affichage et/ou de la surface de commande |
| Détection de la paume de la main sur un chant/rebords et d'au moins un doigt sur le chant/rebord opposé | Déplacement des objets (icônes, boutons de commandes ou de sélection) vers le côté opposé à la paume de la main |
| Détection de la présence, et éventuellement d'un mouvement, d'un objet de commande le long d'un ou des chants/rebords de l'appareil | Sélection d'un bouton de commande virtuel, par exemple d'un bouton de tir dans un jeu exécuté par l'appareil, ou déplacement d'un objet affiché par l'appareil, suivant une direction prédéterminée ou suivant la direction du mouvement détecté |
| Détection de la présence, et éventuellement d'un mouvement, d'un objet de commande le long d'un ou des chants/rebords de l'appareil | Sélection d'une photo, ou déplacement d'une photo ou d'une liste de photo affichée par l'appareil, suivant une direction prédéterminée ou suivant la direction du mouvement détecté, ou encore suivant la position détectée de l'objet de commande |

Bien sûr, l'invention n'est pas limitée aux exemples qui viennent d'être décrits et de nombreux aménagements peuvent être apportés à ces exemples sans sortir du cadre de l'invention.

## Revendications

1. Un procédé (400) pour interagir avec un appareil électronique (200; 300) possédant une surface de contrôle (102) comprenant une pluralité d'électrodes capacitives (104) et au moins une surface neutre (206-212; 302-308) distincte de la surface de contrôle et dépourvue d'électrodes capacitives, le procédé comprenant :
- la réception de signaux de mesure en provenance des électrodes capacitives ;
- sur la base des signaux de mesure reçus, l'utilisation d'un effet de bord d'au moins l'une des électrodes de la pluralité d'électrodes capacitives de la surface de contrôle, cette électrode étant située à proximité de la surface neutre, pour détecter (402) au moins un objet en contact avec la au moins une surface neutre de l'appareil électronique, ou à une distance de celle-ci ; et
- sur la base de l'au moins un objet détecté, le déclenchement (408) d'au moins une fonction dans le dispositif électronique.

2. Le procédé de la revendication 1, comprenant en outre la détermination d'une identité de l'au moins un objet détecté par comparaison des signaux de mesure reçus à un ou plusieurs profils prédéterminés.

3. Le procédé de la revendication 1, comprenant en outre la détermination d'une forme de l'au moins un objet détecté sur la base d'une force des signaux de mesure reçus.

4. Le procédé de la revendication 1, comprenant en outre :
- la détection de deux objets en contact avec la au moins une surface neutre, ou à une distance de celle-ci ; et
- la détermination d'une distance entre les deux objets détectés par identification des électrodes capacitives qui présentent les signaux de mesure reçus les plus forts, et calcul d'une distance entre ces électrodes.

5. Le procédé de la revendication 1, comprenant en outre :
- la détection de trois objets en contact avec la au moins une surface neutre, ou à une distance de celle-ci ; et
- le déverrouillage d'une fonction de l'appareil sur détection des trois objets.

6. Le procédé de la revendication 1, comprenant en outre :
- la détection d'une paume en contact avec une première surface neutre, ou à une distance de celle-ci ;
- la détection d'un doigt en contact avec une deuxième surface neutre, ou à une distance de celle-ci, la première et la deuxième surface neutre étant sur des côtés opposés de la surface de contrôle ; et
- sur détection de la paume et du doigt, le déplacement d'un ou plusieurs objets d'interface utilisateur apparaissant sur un afficheur situé en commun avec la surface de contact, en direction de la deuxième surface neutre.

7. Un appareil électronique (200; 300), comprenant :
- une surface de contrôle (102) comprenant une pluralité d'électrodes capacitives (104);
- au moins une surface neutre (206-212; 302-308) distincte de la surface de contrôle et dépourvue d'électrodes capacitives ;
- un module de mesure électronique configuré pour recevoir des signaux de mesure en provenance des électrodes capacitives ; et
- un module d'analyse configuré pour :
sur la base des signaux de mesure reçus, utiliser un effet de bord d'au moins l'une des électrodes de la pluralité d'électrodes capacitives de la surface de contrôle, cette électrode étant située à proximité de la surface neutre, pour détecter (402) au moins un objet en contact avec la au moins une surface neutre de l'appareil électronique, ou à une distance de celle-ci ; et
sur la base de l'au moins un objet détecté, déclencher (408) au moins une fonction dans le dispositif électronique.

8. L'appareil électronique de la revendication 7, dans lequel au moins une surface neutre est située sur un ou plusieurs côtés de l'appareil électronique.

9. L'appareil électronique de la revendication 7, dans lequel au moins une surface neutre est située dans une zone d'encadrement de la surface de contrôle.

10. L'appareil électronique de la revendication 7, dans lequel au moins une surface neutre est orientée d'un angle non nul par rapport à la surface de contrôle.

11. L'appareil électronique de la revendication 7, où le module d'analyse est en outre configuré pour déterminer une identité de l'au moins un objet par comparaison des signaux de mesure reçus à un ou plusieurs profils prédéterminés.

12. L'appareil électronique de la revendication 7, où le module d'analyse est en outre configuré pour déterminer une forme de l'au moins un objet détecté sur la base d'une force des signaux de mesure reçus.

13. L'appareil électronique de la revendication 7, où :
- le module de mesure électronique est en outre configuré pour détecter deux objets en contact avec la au moins une surface neutre, ou à une distance de celle-ci ; et
- le module d'analyse est en outre configuré pour déterminer une distance entre les deux objets détectés par identification des électrodes capacitives qui présentent les signaux de mesure reçus les plus forts, et calcul d'une distance entre ces électrodes.

14. L'appareil électronique de la revendication 7, où :
- le module de mesure électronique est en outre configuré pour détecter trois objets en contact avec la au moins une surface neutre, ou à une distance de celle-ci ; et
- le module d'analyse est en outre configuré pour déverrouiller une fonction de l'appareil sur détection des trois objets.

15. L'appareil électronique de la revendication 11, où le module d'analyse est en outre configuré pour :
- détecter une paume en contact avec une première surface neutre, ou à une distance de celle-ci;
- détecter un doigt en contact avec une deuxième surface neutre, ou à une distance de celle-ci, la première et la deuxième surface neutre étant sur des côtés opposés de la surface de contrôle ; et
sur détection de la paume et du doigt, déplacer un ou plusieurs objets d'interface utilisateur apparaissant sur un afficheur situé en commun avec la surface de contact, en direction de la deuxième surface neutre.

## Patentansprüche

1. Verfahren (400) zum Interagieren mit einer elektronischen Vorrichtung (200; 300), die eine Steueroberfläche (102) aufweist, die eine Vielzahl von kapazitiven Elektroden (104) und zumindest eine neutrale Oberfläche (206-212; 302-308) aufweist, die unterschiedlich von der Steueroberfläche ist und ohne kapazitive Elektroden, wobei das Verfahren aufweist:
- Empfangen von Messsignalen von den kapazitiven Elektroden;
- auf der Basis der empfangenen Messsignale Verwendung eines Randeffekts zumindest einer der Elektroden aus der Vielzahl der kapazitiven Elektroden der Steueroberfläche, wobei diese Elektrode sich in der Nähe der neutralen Oberfläche befindet, um zumindest ein Objekt in Kontakt mit der zumindest einen neutralen Oberfläche der elektronischen Vorrichtung zu erfassen (402), oder in einem Abstand von dieser; und
- auf der Basis von zumindest dem einen erfassten Objekt Auslösung (408) zumindest einer Funktion in der elektronischen Vorrichtung.

2. Verfahren gemäß Anspruch 1, das weiter die Bestimmung einer Identität des zumindest einen erfassten Objekt durch Vergleich der empfangenen Messsignale mit einem oder mehreren vorbestimmten Profilen umfasst.

3. Verfahren gemäß Anspruch 1, das weiter die Bestimmung einer Form von zumindest einem erfassten Objekt auf der Basis einer Stärke der empfangenen Messsignale aufweist.

4. Verfahren gemäß Anspruch 1, das weiter aufweist:
- Erfassung von zwei Objekten, die in Kontakt mit der zumindest einen neutralen Oberfläche oder in einem Abstand von derselben sind; und
- Bestimmung eines Abstandes zwischen den beiden erfassten Objekten durch Identifizierung der kapazitiven Elektroden, die die stärksten empfangenen Messsignale darstellen, und Berechnung eines Abstandes zwischen diesen Elektroden.

5. Verfahren gemäß Anspruch 1, das weiter aufweist:
- Erfassung von drei Objekten in Kontakt mit der zumindest einen neutralen Oberfläche oder in einem Abstand zu derselben; und
- Entriegelung einer Funktion der Vorrichtung bei Erfassung der drei Objekte.

6. Verfahren gemäß Anspruch 1, das weiter aufweist:
- Erfassung einer Handfläche, die in Kontakt mit einer ersten neutralen Oberfläche oder in einem Abstand von derselben ist;
- Erfassung eines Fingers, der in Kontakt mit einer zweiten neutralen Oberfläche oder in einem Abstand von derselben ist, wobei die erste und die zweite neutrale Oberfläche auf einander gegenüberliegenden Seiten der Steueroberfläche sind; und
- nach Erfassen der Handfläche oder des Fingers Verschieben eines oder mehrerer Benutzerschnittstellenobjekte, die auf einer Anzeige erscheinen, die gemeinsam mit der Kontaktoberfläche angeordnet ist, in Richtung der zweiten neutralen Oberfläche.

7. Elektronische Vorrichtung (200; 300), die aufweist:
- eine Steueroberfläche (102), die eine Vielzahl von kapazitiven Elektroden (104) aufweist;
- zumindest eine neutrale Oberfläche (206-212; 302-308), die unterschiedlich von der Steueroberfläche ist und keine kapazitiven Elektroden aufweist;
- ein elektronisches Messmodul, das konfiguriert ist, um Messsignale von den kapazitiven Elektroden zu empfangen; und
- ein Analysemodul, das konfiguriert ist, um:
auf der Basis der empfangenen Messsignale einen Randeffekt von zumindest einer der Vielzahl von kapazitiven Elektroden der Steueroberfläche zu verwenden, wobei diese Elektrode sich in der Nähe der neutralen Oberfläche befindet, um zumindest ein Objekt zu erfassen (402), das in Kontakt mit der zumindest einen neutralen Oberfläche der elektronischen Vorrichtung oder in einem Abstand von derselben ist; und
auf der Basis des zumindest einen erfassten Objekts zumindest eine Funktion in der elektronischen Vorrichtung auszulösen (408).

8. Elektronische Vorrichtung gemäß Anspruch 7, bei der zumindest eine neutrale Oberfläche sich auf einer oder mehreren Seiten der elektronischen Vorrichtung befindet.

9. Elektronische Vorrichtung gemäß Anspruch 7, bei der zumindest eine neutrale Oberfläche sich in einem Rahmenbereich der Steueroberfläche befindet.

10. Elektronische Vorrichtung gemäß Anspruch 7, bei der zumindest eine neutrale Oberfläche in einem Winkel ausgerichtet ist, der nicht Null bezüglich der Steueroberfläche ist.

11. Elektronische Vorrichtung gemäß Anspruch 7, bei der das Analysemodul weiter konfiguriert ist, um eine Identität des einen Objekts durch Vergleich der empfangenen Messsignale mit einem oder mehreren vorbestimmten Profilen zu bestimmen.

12. Elektronische Vorrichtung gemäß Anspruch 7, bei der das Analysemodul weiter konfiguriert ist, um eine Form des zumindest einen erfassten Objekts auf der Basis einer Stärke der empfangenen Messsignale zu bestimmen.

13. Elektronische Vorrichtung gemäß Anspruch 7, bei der:
- das elektronische Messmodul weiter konfiguriert ist, um zwei Objekte zu erfassen, die in Kontakt mit der zumindest einen neutralen Oberfläche oder in einem Abstand von derselben sind; und
- das Analysemodul weiter konfiguriert ist, um einen Abstand zwischen den beiden erfassten Objekten durch Identifizierung der kapazitiven Elektroden zu bestimmen, die die stärksten empfangenen Messsignale darstellen, und Berechnung eines Abstandes zwischen diesen Elektroden.

14. Elektronische Vorrichtung gemäß Anspruch 7, bei der:
- das elektronische Messmodul weiter konfiguriert ist, um drei Objekte zu erfassen, die in Kontakt mit zumindest einer neutralen Oberfläche oder im Abstand von derselben sind; und
- das Analysemodul weiter konfiguriert ist, um eine Funktion der Vorrichtung bei Erfassung der drei Objekte zu entriegeln.

15. Elektronische Vorrichtung gemäß Anspruch 11, bei der das Analysemodul außerdem konfiguriert ist, um:
- eine Handfläche zu erfassen, die in Kontakt mit einer ersten neutralen Oberfläche oder in einem Abstand von derselben ist;
- einen Finger zu erfassen, der in Kontakt mit einer zweiten neutralen Oberfläche oder im Abstand von derselben ist, wobei die erste und zweite neutrale Oberfläche auf gegenüberliegenden Seiten der Steueroberfläche sind; und
bei Erfassung der Handfläche und des Fingers, Verschieben eines oder mehrerer Benutzerschnittstellenobjekte, die auf einer Anzeige erscheinen, die gemeinsam mit der Kontaktoberfläche angeordnet ist, in Richtung der zweiten neutralen Oberfläche.

## Claims

1. A method (400) for interacting with an electronic device (200; 300) having a control surface (102) including a plurality of capacitive electrodes (104) and at least one neutral surface (206-212; 302-308) separate from the control surface and free of capacitive electrodes, the method comprising:
- receiving measurement signals from the capacitive electrodes;
- based on the received measurement signals, utilizing an edge effect of at least one of the plurality of capacitive electrodes of the control surface, said electrode proximate to the neutral surface, to detect (402) at least one object in contact with, or at a distance from, the at least one neutral surface of the electronic device; and
- based on the detected at least one object, triggering (408) at least one function in the electronic device.

2. The method of claim 1, further comprising determining an identity of the detected at least one object by comparing the received measurement signals to one or more predetermined profiles.

3. The method of claim 1, further comprising determining a shape of the detected at least one object based on a strength of the received measurement signals.

4. The method of claim 1, further comprising:
- detecting two objects in contact with, or at a distance from, the at least one neutral surface; and
- determining a distance between the two detected objects by identifying capacitive electrodes presenting the strongest received measurement signals and computing a distance between those electrodes.

5. The method of claim 1, further comprising:
- detecting three objects in contact with, or at a distance from, the at least one neutral surface; and
- unlocking a function of the device upon detection of the three objects.

6. The method of claim 2, further comprising:
- detecting a palm in contact with, or at a distance from, a first neutral surface;
- detecting a finger in contact with, or at a distance from, a second neutral surface, wherein the first and second neutral surfaces are on opposite sides of the control surface; and
- upon detection of the palm and the finger, moving one or more user interface objects appearing on a display co-located with the control surface towards the second neutral surface.

7. An electronic device (200; 300), comprising:
- a control surface (102) including a plurality of capacitive electrodes (104);
- at least one neutral surface (206-212; 302-308) separate from the control surface and free of capacitive electrodes;
- an electronic measurement module configured for receiving measurement signals from the capacitive electrodes; and
- an analysis module configured for
based on the received measurement signals, utilizing an edge effect of at least one of the plurality of capacitive electrodes of the control surface, said electrode proximate to the neutral surface, to detect (402) at least one object in contact with, or at a distance from, the at least one neutral surface of the electronic device, and
based on the detected at least one object, triggering (408) at least one function in the electronic device.

8. The device of claim 7, wherein at least one neutral surface is located on one or more sides of the electronic device.

9. The device of claim 7, wherein at least one neutral surface is located in a bezel area of the control surface.

10. The device of claim 7, wherein at least one neutral surface is oriented at a non-zero angle with respect to the control surface.

11. The device of claim 7, the analysis module further configured for determining an identity of the detected at least one object by comparing the received measurement signals to one or more predetermined profiles.

12. The device of claim 7, the analysis module further configured for determining a shape of the detected at least one object based on a strength of the received measurement signals.

13. The device of claim 7:
- the electronic measurement module further configured for detecting two objects in contact with, or at a distance from, the at least one neutral surface; and
- the analysis module further configured for determining a distance between the two detected objects by identifying capacitive electrodes presenting the strongest received measurement signals and computing a distance between those electrodes.

14. The device of claim 7:
- the electronic measurement module further configured for detecting three objects in contact with, or at a distance from, the at least one neutral surface; and
- the analysis module further configured for unlocking a function of the device upon detection of the three objects.

15. The device of claim 11, the analysis module further configured for:
- detecting a palm in contact with, or at a distance from, a first neutral surface;
- detecting a finger in contact with, or at a distance from, a second neutral surface, wherein the first and second neutral surfaces are on opposite sides of the control surface; and
upon detection of the palm and the finger, moving one or more user interface objects appearing on a display co-located with the control surface towards the second neutral surface.
